# EUROPEAN PATENT APPLICATION

(11) **EP 2 476 739 A1**
(43) Veröffentlichungstag der Anmeldung: **18.07.2012**
(21) Anmeldenummer: 10814042.7
(22) Anmeldetag: 02.09.2010
(51) Int. Cl.: C10B 53/07

(54) **ANORDNUNG ZUR VERARBEITUNG EINES KOHLENSTOFFHALTIGEN ROHMATERIALS**

(30) Priorität: 07.09.2009 UA 2009009159
(71) Anmelder: Tsyhankov, Ivan Yurjevich, Ivano-Frankovskaya obl. 78238 (UA); Sagalevych, Marat Alexandrovich, Kiev 01054 (UA)
(72) Erfinder: Tsyhankov, Ivan Yurjevich, Ivano-Frankovskaya obl. 78238 (UA); Sagalevych, Marat Alexandrovich, Kiev 01054 (UA)
(74) Vertreter: Jeck, Anton
(86) Internationale Anmeldenummer: PCT/UA2010/000055
(87) Internationale Veröffentlichungsnummer: WO 2011/028194

(57) **Zusammenfassung**

Die Erfindung betrifft eine Anlage zur Verarbeitung eines kohlenstoffhaltigen Rohstoffs, die einen Körper mit einer Einhüllung aufweist der in eine Gaserzeugungskammer mit einer Decke und zwei Auf- und Ausladungslücken und eine Vergasungskammer aufgeteilt ist, sowie Mittel für eine Luftzufuhr und eine Entlüftung aufweist, wobei die Gaserzeugungskammer sich über der Verbrennungskammer befindet und von dieser durch eine Platte getrennt ist, die mit einer Möglichkeit einer Zwangsabkühlung versehen und von wenigstens einem Zentralloch versorgt ist, wobei die Luftzufuhrmittel in Form von Löchern ausgeführt sind, die unter die Einhüllung strömen und sich in der Gaserzeugungskammer über der Platte befinden, und wobei die Einhüllung in ihrem oberen Teil ein oder mehrere Löcher aufweist, die mit Klappen ausgestattet sind. Die Leistung der Anlage kann dadurch gesteigert werden, dass die Verbrennungskammer aus drei eigenständigen Kammern besteht, die sich nebeneinander befinden und miteinander durch Löcher verbunden sind, dass jede Kammer wenigstens ein Loch für eine Luftzufuhr aufweist, wobei sich die Löcher in Seitenwänden der Seitenkammern im Winkel zu diesen befinden und das Loch in der Zentralkammer direkt im Deckel angeordnet ist, mit dem diese Kammer ausgestattet ist, und dass die Gaserzeugungskammer zusätzlich mit Lücken für eine Ascheausladung versehen und ihre Decke bogenförmig gestaltet ist.

## Beschreibung

Die Erfindung betrifft eine Anlage zur Verarbeitung eines kohlenstoffhaltigen Rohstoffs nach dem Oberbegriff des Anspruchs 1.

Die Erfindung gehört zu den Vorrichtungen und Aggregaten zur Verarbeitung eines kohlenstoffhaltigen Rohstoffs und kann für die Verarbeitung von nicht zerkleinerten gebrauchten Reifen von Motorrädern, Fahrzeugen und Traktoren und von anderen Abfällen nicht organischer Herkunft verwendet werden.

Bekannt ist eine Anlage zur Pyrolyse von verschleißten Reifen, die eine vertikale Pyrolysekammer aufweist, die eine im Inneren der Kammer eingestellte rohrförmige Heizungsquelle enthält, die mit einer Abhub- und Senkeinrichtung zusammenwirkt und mit Stutzen für die Herausführung der gasförmigen und flüssigen Umsetzungsprodukte sowie mit verschiedenen Knoten für die Trennung der Drahteinlagen von den Schlacken versehen ist. Das Reifenpaket wird an der äußeren Seite der rohrförmigen Heizungsquelle eingerichtet (s. Antrag von Japan Nr. 58-24473, IPC C10B 3/02, 1983).

Der Mangel dieser bekannten Anlage ist die Kompliziertheit der Konstruktion und ein großer Energieaufwand bei der Reifenerhitzung am inneren Durchmesser.

Bekannt ist eine Anlage für die Pyrolyse von unzerkleinerten Fahrzeug- und Traktorenreifen, die einen oberen und einen unteren Teil einer Pyrolysekammer enthält, die mittels einer lösbaren Kegelverbindung verbunden sind. Ein paar Anlagen erlauben die Erhitzung der Fahrzeug- und Traktorenreifen am äußeren und inneren Durchmesser (Patent RF Nr. 2078111, IPC C10B 3/02, ABI. Nr. in 12, 1997).

Der Mangel dieser bekannten Anlage ist die Kompliziertheit der Konstruktion der lösbaren Pyrolysekammer sowie der erhöhte Arbeitsaufwand bei der Auf- und Ausladung des Stoffs, der sich in der lösbaren Pyrolysekammer befindet.

Bekannt ist eine Anlage zur Verarbeitung eines kohlenstoffhaltigen Rohstoffs durch Pyrolyse mittels seiner Pyrogenesis, die eine ringförmige Gaserzeugungskammer, einen Stutzen für die Ein- und Ausströmung von Beheizungsgas, Mittel für den Entzug der Pyrolyseprodukte sowie einen Gaserzeuger, der auf dem technischen Kohlenstoff läuft, und eine originelle Verbrennungskammer einschließt (s. Patent RF Nr. 2258078, IPC C10B53/08, B29B17/00, in 10.08.2005).

Der Mangel dieser bekannten Anlage ist eine niedrige Universalität bei der Pyrolyse von kohlenstoffhaltigen Rohstoffen mit verschiedener Zusammensetzung als Ergebnis der Unmöglichkeit einer Erhaltung einer Vorgabetemperatur und eines Vorgabedrucks. Dies ist dadurch bedingt, dass in dieser Anlage eine fraktionelle Einteilung der Pyrolyseprodukte verläuft, die eine ständige Veränderung der Zusammensetzung des Stoffs, der der Pyrolyse unterliegt, anzieht.

Die der Erfindung nächstkommende Anlage zur Verarbeitung eines kohlenstoffhaltigen Rohstoffs durch Gaserzeugung weist einen Körper mit einer Einhüllung auf, der eine Gaserzeugungskammer mit einer Decke und zwei Auf- und Ausladungslücken und eine Verbrennungskammer sowie ein Luftzufuhrmittel einschließt, wobei die Gaserzeugungskammer über der Verbrennungskammer installiert und von der Verbrennungskammer durch eine Platte getrennt ist, die auf eine solche Weise gebaut ist, dass sie eine Zwangskühlung verursacht und zwei oder mehrere Löcher hat. Dabei sind die Luftzufuhrmittel in Form von Löchern ausgebildet. Die Löcher durchdringen die Einhüllung und befinden sich in der Gaserzeugungskammer über der Platte. Die Einhüllung weist in ihrem oberen Teil ein oder mehrere Löcher auf, die mit Klappen versehen sind (s. Patent der Ukraine Nr. 42719, IPC (2006) C10B 53/08, B29B17/00, 10.07.2009).

Der Mangel dieser bekannten Anlage ist die ungenügende Leistung, die sie entwickeln kann (nicht mehr als 2 MW). Der Mangel ist durch eine Unfähigkeit der Kontrolle über die Luftströme, sowohl bezüglich des Luftcharakters als auch des Luftumfangs, bedingt, die durch die Kammer strömen. Dadurch ist die Möglichkeit der Leistungsentwicklung begrenzt.

Es ist Aufgabe der Erfindung, eine Anlage zur Verarbeitung eines kohlenstoffhaltigen Rohstoffs zu bauen, in der mittels einer Veränderung der Konstruktion der Verbrennungskammer und einer Vervollkommnung des Lochsystems die Möglichkeit besteht, Wirbelströme von verschiedener Geschwindigkeit und verschiedener Temperatur zu erzeugen und so die Leistung der Anlage zu steigern (bis auf 4 MW). Dabei stellt die Anlage eine umweltfreundliche Verwertung der Abfälle sicher.

Die gestellte Aufgabe wird durch die Merkmale des Anspruchs 1 gelöst.

Die Anlage zur Verarbeitung eines kohlenstoffhaltigen Rohstoffs nach der Erfindung weist einen Körper mit einer Einhüllung auf, der in eine Gaserzeugungskammer mit einer Decke und zwei Auf- und Ausladungslücken und in eine Verbrennungskammer sowie Mittel für eine Luftzufuhr und eine Entlüftung eingeteilt ist, wobei die Gaserzeugungskammer über der Verbrennungskammer liegt und durch eine Platte getrennt ist. Die Platte ist auf eine solche Weise gebaut, dass sie eine Zwangskühlung verursacht und mit zumindest einem zentralen Loch versehen ist. Die Luftzufuhrmittel sind in Form von Löchern ausgebildet, die die Einhüllung durchdringen und sich über der Platte in der Gaserzeugungskammer befinden. Die Einhüllung in dem oberen Teil weist ein oder mehrere Löcher auf, die mit Klappen ausgerüstet sind. Gemäß der Erfindung ist die Verbrennungskammer in Form von drei autonomen Kammern ausgebildet, die nebeneinander angeordnet und über Löcher miteinander verbunden sind. Jede von zwei Kammern enthält zumindest ein Loch für die Luftzufuhr, wobei die Löcher in Seitenwänden der Seitenkammern sich im Winkel zu diesen befinden. Das Loch in der Zentralkammer liegt unmittelbar in einem Deckel, mit dem die Kammer ausgestattet ist. Außerdem ist die Gaserzeugungskammer zusätzlich mit Ascheentfernungslücken ausgerüstet, und ihre Decke ist bogenförmig gestaltet.

In einer vorzüglichen Ausführung ist die bogenförmige Decke im Verhältnis zur vertikalen Achse des Körpers symmetrisch gestaltet. Für die Steigerung der Standhaftigkeit bei Temperaturgefällen sind die Decke und alle Arbeitselemente der Anlage aus Feuerfeststeinen gebaut.

In einer der Ausführungsvarianten befinden sich für eine bequeme Ascheausladung die Lücken für die Ascheausladung über der Platte neben ihren Seiten.

Für den Fall der Notwendigkeit einer Notentlüftung ist die Gaserzeugungskammer zusätzlich mit einem Loch mit einer Klappe ausgestattet, das sich im Zentrum gegenüber den Auf- und Ausladungslücken befindet und mit einem Schornstein verbunden ist.

Um den Verlust an Gas bei der Öffnung der Lücken zu verringern, ist die Gaserzeugungskammer zusätzlich mit einem Luftzug ausgestattet, der sich in ihrem oberen Teil über den Auf- und Ausladungslücken befindet und zur Rückkehr der Gase unter die Abdeckhaube beiträgt.

In einer weiteren Ausführungsvariante sind für die Möglichkeit der Steuerung des Luftstromumfangs, der durch die Löcher strömt, die Mittel für die Luftzufuhr und die Entlüftung in der Gaserzeugungskammer und alle Löcher der Anlage mit Klappen als Blenden ausgerüstet.

Für die gasgeneratore Verarbeitung des kohlenstoffhaltigen Rohstoffs, abhängig vom Umfang und der Qualität des Ausgangsrohstoffs, kann die Platte einige Löcher aufweisen, die sowohl runden als auch scheibenförmigen Querschnitt aufweisen können.

Für die Möglichkeit einer Steuerung des Charakters des Luftstroms, der durch die Seitenverbrennungskammern läuft, beträgt der Lagewinkel der Seitenkammerlöcher im Verhältnis zu den Seitenwänden 45°.

Für eine Steigerung des Ascheausladungsumfangs sind die Seitenverbrennungskammern zusätzlich mit Ascheentfernungslücken ausgerüstet.

Man kann noch viele Beispiele von Varianten der Anlageausführung anführen, zum Beispiel:
Für die Bequemlichkeit des Plattenaustauschs bei einer Veränderung der Arbeitsbedingungen oder im Fall eines Plattenverschleißes ist vorgesehen, dass die Platte abnehmbar ist.

Das Mittel für die Zwangsabkühlung der Platte kann zum Beispiel in Form von Rohren mit einem Kühlagenten oder in Form eines äußeren abkühlenden Überzugs ausgebildet sein.

Für die Intensivierung des Prozesses der Pyrolyse ist die Oberfläche der Platte wenigstens der Gaserzeugungskammer zugekehrt, wellenartig oder gerippt ausgeführt.

In einer optimalen Ausführung verhält sich das Volumen der Verbrennungskammer zu dem Volumen der Gaserzeugungskammer wie 1 : 1,3, und die gesamte Größe der Löcher für die Luftzufuhr in der Gaserzeugungskammer verhält sich zur gesamten Größe der Löcher in der Platte wie 1 : 1,8.

Für die Bildung eines konzentrierten Gasstroms in der Verbrennungskammer enthält die Anlage zusätzlich einen Ejektorbrenner, der in der Verbrennungskammer installiert ist.

Für die Möglichkeit einer automatischen Vorgangssteuerung ist die Anlage zusätzlich mit einem Bedienungsblock des Ejektorbrenners und/oder mit einem Bedienungsblock des Pyrolysevorgangs ausgerüstet.

Abhängig von der Brennstoffart ist die Gaserzeugungskammer mit Auf- und Ausladungslücken ausgestattet.

Die Anzahl der Löcher, die die Einhüllung der Gaserzeugungskammer durchdringen, wählt man abhängig von der gewünschten Leistung der Anlage.

Die Aufstellung der Löcher in der Gaserzeugungskammer spiegelverkehrt zueinander verursacht die Entstehung von Verwirbelungen, die den Gaserzeugungsprozess beschleunigen und die Effizienz der Anlage steigern.

Die Ausführungen der Anlage sind nicht durch die angeführten konkreten Beispiele begrenzt.

Die Erfindung wird anhand eines in der Zeichnung dargestellten Ausführungsbeispiels näher erläutert. Es zeigt:

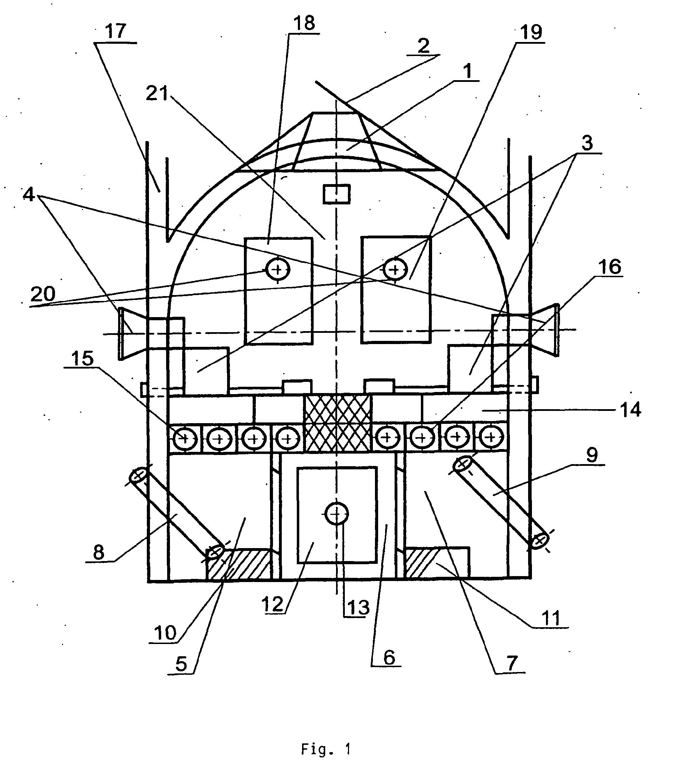

- Fig. 1: schematisch eine Anlage zur Verarbeitung eines kohlenstoffhaltigen Rohstoffs.

In der Zeichnung nach Fig. 1 ist der allgemeine Aufbau der Anlage zur Gaserzeugungsverarbeitung eines kohlenstoffhaltigen Rohstoffs dargestellt.

Die Anlage zur Verarbeitung eines kohlenstoffhaltigen Rohstoffs besteht aus einem Körper mit einer Einhüllung 17, der in eine Gaserzeugungskammer 21 mit einer Decke 1 und zwei Aufladungslücken 18, 19 und eine Verbrennungskammer mit drei autonomen Kammern 5, 6, 7, die nebeneinander angeordnet sind, eingeteilt ist. Die Gaserzeugungskammer 21 befindet sich über den Verbrennungskammern 5, 6, 7 und ist von diesen durch eine Platte 14 getrennt, die mit einer Möglichkeit einer Zwangsabkühlung und Löchern 15 mit Klappen 16 versehen ist. Luftzufuhrmittel in Form von Löchern 20 sind in den Aufladungslücken 18, 19 ausgebildet. Die Löcher 20 laufen unter der Einhüllung 17 aus und befinden sich in der Gaserzeugungskammer 21 über der Platte 14 (auf der Zeichnung nicht sichtbar). Die Einhüllung 17 enthält in ihrem oberen Teil ein oder mehrere Löcher, die mit Klappen 4 versehen sind. Jede der Kammern 5, 6, 7 hat wenigstens ein Loch 8, 13, 9 für die Luftzufuhr, wobei die Löcher 8, 9 in den Seitenkammern 5, 7 sich in ihren Seitenwänden im Winkel zu diesen befinden. Das Loch 13 in der Zentralkammer 6 liegt direkt in dem Deckel 12, mit dem die Kammer 6 ausgerüstet ist. Außerdem ist die Gaserzeugungskammer 21 mit Lücken 3 für die Ascheausladung versehen, die sich über der Platte 14 an ihren Kanten befindet. Die Decke 1 ist bogenförmig. Die Seitenverbrennungskammern 5, 7 sind zusätzlich mit Lücken 10, 11 für die Ascheausladung versehen. Die Gaserzeugungskammer 21 ist mit einem Loch mit Klappe 2 ausgestattet, das sich gegenüber den Ausladungslücken 18, 19 befindet.

### Die Anlage arbeitet auf folgende Weise:

Die Aufladungslücken 18, 19 werden geöffnet, und die Gaserzeugungskammer 21 wird mit organischem Ausgangsrohstoff beladen. Der Rohstoff (am Anfang ist dies besser trockenes Holz) wird entflammt, danach schließt man die Aufladungslücken 18, 19, und in der Gaserzeugungskammer 21 entsteht dank der Lage der Offenklappe ein Druck, der für die Durchführung des Vorgangs nötig ist. Die Flamme ist zuerst für die Erwärmung der Decke 1 der Gaserzeugungskammer 21 von unten nach oben gerichtet, wonach man ein Rauchgasgebläse einschaltet (auf der Zeichnung nicht gezeigt). Dabei wird die Flamme durch das Loch 20 in der Platte 14 in die zentrale Verbrennungskammer 6 gerichtet. In die Verbrennungskammer 6 gelangt auch durch das Loch 13 Luft, die die Oxidation der Pyrolyseprodukte fördert. Dank der Luftzufuhr durch das Loch 9, 8 erzeugen die aus der Verbrennungskammer 6 strömenden Verbrennungsprodukte einen Wirbelstrom und laufen durch das Loch 24 zum Wärmetauscher (auf der Zeichnung nicht gezeigt). In der Anlage verläuft der Vorgang einer völligen thermischen Spaltung der organischen Abfälle und Stoffe, unabhängig von ihrem hohen Feuchtegehalt und Molekulargewicht. Die Luft, die durch die Klappe 4 in die Gaserzeugungskammer 21 gelangt, gewährleistet die Verarbeitung des Rohstoffs. Die Luft wird für die Unterstützung des Pyrolyseprozesses verbraucht, d. h. der thermischen Spaltung des kohlenstoffhaltigen Rohstoffs unter dem begrenzten Luftzugang. Dank der vorgeschlagenen Konstruktion wird in der Gaserzeugungskammer 21 eine Luftbewegung mit turbulentem Charakter (Temperatur- und Druckverhältnisse) gebildet, bei der der Rohstoff unabhängig von seiner Zusammensetzung und seinem hohen Feuchtegehalt vollständig gespaltet wird. Der Gasstrom, der während der Verbrennung gebildet wird, hat dank der Einhaltung des notwendigen Druck- und Turbulenzverhältnisses in der Gaserzeugungskammer 21 und in den Verbrennungskammern 6, 5, 7 eine Sollrichtung und tritt durch das Loch 20 der Platte 14 in die Kammer 6 und durch die Löcher 22, 23 in die Kammern 5, 7 aus. Durch die Löcher 13, 8, 9 wird den Kammern 6, 5, 7 eine Sekundärluft zugeführt, die einen wirbelförmigen Turbulenzstrom bildet. Dadurch wird eine vollständige Verbrennung der Produkte gefördert. Die Intensität der Bewegung dieses Stroms hängt von der Lage der Klappen 4 am Eingang in die Gaserzeugungskammer 21 ab.

Die Erfindung erlaubt, die Effizienz der Pyrolyse eines kohlenstoffhaltigen Rohstoffs (Brennstoffs) zu steigern, sowie Abfälle organischer Herkunft (Kunststoffabfall, technische Gummiwaren, Pestizide, Schlamm und Abfälle der Kläranlagen, der Ölverarbeitung, der medizinischen und pharmazeutischen Betriebe, Küchenabfälle, biologische Abfälle) sowie feste Ersatzbrennstoffarten mit verschiedenen Verbindungen und mit einer Feuchtegehaltsbandbreite von 0 bis 55 % mittels einer turbulenten wirbelförmigen gerichteten Verbrennung der Pyroprodukte mit einer maximalen Energiekonversion unschädlich zu machen und zu entseuchen.

## Patentansprüche

1. Anlage zur Verarbeitung eines kohlenstoffhaltigen Rohstoffs, die einen Körper mit einer Einhüllung (17) aufweist der in eine Gaserzeugungskammer (21) mit einer Decke (1) und zwei Auf- und Ausladungslücken (18, 19) und eine Vergasungskammer aufgeteilt ist, sowie Mittel für eine Luftzufuhr und eine Entlüftung aufweist, wobei die Gaserzeugungskammer (21) sich über der Verbrennungskammer befindet und von dieser durch eine Platte (14) getrennt ist, die mit einer Möglichkeit einer Zwangsabkühlung versehen und von wenigstens einem Zentralloch versorgt ist, wobei die Luftzufuhrmittel in Form von Löchern (20) ausgeführt sind, die unter die Einhüllung (17) strömen und sich in der Gaserzeugungskammer (21) über der Platte (14) befinden, und wobei die Einhüllung (17) in ihrem oberen Teil ein oder mehrere Löcher aufweist, die mit Klappen (4) ausgestattet sind,
**dadurch gekennzeichnet,**
**dass** die Verbrennungskammer aus drei eigenständigen Kammern (5, 6, 7) besteht, die sich nebeneinander befinden und miteinander durch Löcher verbunden sind,
**dass** jede Kammer (5, 6, 7) wenigstens ein Loch (8, 13, 9) für eine Luftzufuhr aufweist, wobei sich die Löcher (8, 9) in Seitenwänden der Seitenkammern (5, 7) im Winkel zu diesen befinden und das Loch (13) in der Zentralkammer (6) direkt im Deckel (12) angeordnet ist, mit dem die Kammer (6) ausgestattet ist, und
**dass** die Gaserzeugungskammer (21) zusätzlich mit Lücken (3) für eine Ascheausladung versehen und ihre Decke (1) bogenförmig gestaltet ist

2. Anlage nach Anspruch 1,
**dadurch gekennzeichnet,**
**dass** die Decke (1) im Verhältnis zur vertikalen Achse des Körpers (17) symmetrisch ausgeführt ist.

3. Anlage nach Anspruch 1 oder 2,
**dadurch gekennzeichnet,**
**dass** die Decke (1) bogenförmig und aus Feuerfeststeinen hergestellt ist.

4. Anlage nach Anspruch 1,
**dadurch gekennzeichnet,**
**dass** sich die Lücken (3) für die Ascheausladung über der Platte (14) auf deren Seiten befinden.

5. Anlage nach Anspruch 1,
**dadurch gekennzeichnet,**
**dass** die Gaserzeugungskammer (21) zusätzlich mit einem Loch mit Klappe (2) ausgestaltet ist, das sich im Zentrum gegenüber den Auf- und Ausladungslücken (18, 19) befindet.

6. Anlage nach Anspruch 1,
**dadurch gekennzeichnet,**
**dass** die Gaserzeugungskammer (21) zusätzlich mit einem Luftzug ausgerüstet ist, der sich in ihrem oberen Teil über den Auf- und Ausladungslücken (18, 19) befindet.

7. Anlage nach Anspruch 1,
**dadurch gekennzeichnet,**
**dass** die Mittel für die Luftzufuhr und die Entlüftung in der Gaserzeugungskammer (21) mit den Klappen (2) als eine Blende ausgestattet sind.

8. Anlage nach Anspruch 1,
**dadurch gekennzeichnet,**
**dass** die Platte (14) mehrere Löcher aufweist.

9. Anlage nach Anspruch 8,
**dadurch gekennzeichnet,**
**dass** die Löcher in der Platte (14) mit den Klappen als Blenden ausgerüstet sind.

10. Anlage nach Anspruch 1,
**dadurch gekennzeichnet,**
**dass** das Loch (13) in der zentralen Verbrennungskammer (6) mit einer Klappe ausgestattet ist.

11. Anlage nach Anspruch 1,
**dadurch gekennzeichnet,**
**dass** der Winkel der Lage der Löcher in den Seitenkammern (5, 7) im Verhältnis zu ihren Seitenwänden 45° beträgt.

12. Anlage nach Anspruch 1,
**dadurch gekennzeichnet,**
**dass** die Seitenverbrennungskammern (5, 7) zusätzlich mit Lücken (3) für die Ascheausladung ausgestattet sind.
